# EUROPÄISCHE PATENTANMELDUNG

(11) **EP 0 671 449 A2**
(43) Veröffentlichungstag der Anmeldung: **13.09.1995**
(21) Anmeldenummer: 95103020.4
(22) Anmeldetag: 03.03.1995
(51) Int. Cl.: C09D 163/00, C09D 123/28, C08J 7/04

(54) **Wässrigen Überzugsmittel und dessen Verwendung bei Verfahren zur Beschichtung von Kunststoffsubstraten**

(30) Priorität: 04.03.1994 DE 4407121
(71) Anmelder: Herberts Gesellschaft mit beschränkter Haftung, D-42285 Wuppertal (DE)
(72) Erfinder: Schreiber, Peter, Dr., D-45529 Hattingen (DE); Goecke, Stefanie, D-58256 Ennepetal (DE); Windmann, Reinhard, D-42279 Wuppertal (DE)
(74) Vertreter: Türk, Gille, Hrabal, Leifert

(57) **Zusammenfassung**

Wäßriges Zweikomponenten-Überzugsmittel, enthaltend
7,5 bis 25 Gew.-% mindestens eines Epoxidharzes in Dispersionsform, bezogen auf den Harzfestkörper,
1,5 bis 15 Gew.-% mindestens eines wassermischbaren Polyamins,
2 bis 15 Gew.-% mindestens eines chlorierten Polyolefins mit einem Chlorierungsgrad von 15 bis 40 Gew.-%,
0 bis unter 5 Gew.-% eines oder mehrerer organischer Lösungsmittel,
85 bis 35 Gew.-% Wasser,
sowie lackübliche Additive, Pigmente und/oder Füllstoffe.

Die Überzugsmittel sind geeignet zur Verwendung bei Verfahren zur Beschichtung von Kunststoffsubstraten, insbesondere Polyolefinsubstraten.

## Beschreibung

Die Erfindung betrifft ein Überzugsmittel auf Basis von vernetzenden Bindemittelsystemen zusammen mit chlorierten Polyolefinen (CPO), das zur Beschichtung von Kunststoffsubstraten dient. Weiterhin werden Mehrschichtlackierungen auf den Substraten beschrieben sowie Verfahren zu ihrer Herstellung.

Die Verwendung von Polypropylen (PP) in reiner Form oder aber als Kautschuk-modifizierte, schlagzäh eingestellte Version (PP-EPDM-Blends) als Werkstücke ist für eine Vielzahl von Einsatzbereichen immer umfassender geworden, insbesondere aufgrund der exzellenten Eigenschaften im Vergleich mit anderen Kunststoffen. Speziell im Automobilsektor ist PP das Polymer der Wahl für interne und externe Automobilbauteile geworden, z.B. für die Verwendung von Stoßfängern, Seitenspiegelhalterungen, Türgriffen etc.

Bei der Verwendung von PP-Anbauteilen im Außeneinsatzbereich ist es oft wünschenswert und kommt immer häufiger zur Anwendung, die Werkstücke aus dekorativen und protektiven Gründen zu lackieren. Unglücklicherweise ist es wegen der nur sehr geringen Oberflächenspannung und niedrigen Polarität des PP schwierig, neben einer adäquaten Beschichtungsfilmbildung, auch noch eine ausreichend gute Substrathaftung zu erzielen. Dieses Problem kann technisch z.B. durch physikalisch-chemische Vorbehandlungsprozesse am PP, wie etwa Beflammen oder Niederdruckplasma-Aktivierung, gelöst werden. Bei beiden Methoden wird eine polare, dann problemlos beschichtbare Substratoberfläche erzeugt. Die so erzeugte Oberflächenaktivierung ist jedoch rückläufig, zudem sind diese Aktivierungsprozesse anlagentechnisch sehr aufwendig, zum Teil auch nur diskontinuierlich betreibbar (Plasma) oder aber bei komplexer geformten Werkstücken stellenweise mangelhaft (Beflammen).

Eine andere Problemlösung stellt die Verwendung von Beschichtungssystemen, wie etwa die Verwendung von in organischen Lösemitteln gelösten chlorierten Polyolefinen (CPO) dar, wobei das CPO entweder allein (z.B. US-A-4 303 697, US-A-4 070 421 und US-A-3 579 485), oder in Verbindung mit einem filmbildenden Polymer, wie z.B. Acrylat- oder Urethanpolymeren eingesetzt wird. Das CPO bewirkt eine ausgezeichnete Haftung auf PP-Substraten. Die Chlorierung selbst ist erforderlich, um ausreichende Löslichkeit in den benötigten Lösungsmitteln, wie etwa Toluol oder Xylol, zu gewährleisten. Nachteilig wirkt sich jedoch die relativ schlechte CPO-Verträglichkeit mit üblichen Bindemittel-Harzen aus.

Alle diese Beschichtungssysteme weisen jedoch den gravierenden Nachteil des Vorhandenseins sehr großer flüchtiger - zumeist auch aromatischer - Lösemittelmengen auf, die es aus umwelt- und arbeitssicherheitsrelevanten Gründen drastisch zu reduzieren gilt.

Weiterhin werden in der WO 93/01 244 wäßrige Zusammensetzungen beschrieben, die aus chlorierten Polyolefinen (CPO), einem hohen Anteil an einen nicht-ionischen Emulgator sowie zur Neutralisation aus Aminen und Wasser bestehen. Diese Zusammensetzungen können als Grundierungsmittel verwendet oder gegebenenfalls in Anstrichmittel eingerührt werden.

Die WO 90/12 056 beschreibt ebenfalls wäßrige, im allgemeinen lösungsmittelfreie, Zusammensetzungen auf der Basis von CPO sowie anionischen Emulgatoren und Wasser, die nach speziellen Verfahren hergestellt werden. Aus diesen Zusammensetzungen können gegebenenfalls durch Zusatz von Polyurethanharzen Überzugsmittel hergestellt werden. Diese Polyurethanharze werden als anionisch stabilisierte Harze beschrieben.

Die WO 90/12 656 beschreibt wäßrige Überzugsmittel auf der Basis von niedermolekularen Alkoholen, chlorierten Harze sowie Emulgatoren und als Emulgator wirkenden Aminen. Diese Überzugsmittel sollen einen Festkörper unter 5 Gew.-% aufweisen. Sie werden direkt auf zu beschichtende Substrate aufgetragen.

Bei den oben beschriebenen wäßrigen Überzugsmitteln handelt es sich um solche, die auf ein Kunststoffsubstrat aufgetragen werden, physikalisch getrocknet werden und danach mit Folgeüberzugsmitteln überbeschichtet werden. Sie haben jedoch den Nachteil, daß nach üblicher Trocknung dieser Systeme erhaltene Überzüge, bei einer Belastung mit Schwitzwasser oder in der Wasserlagerung große Schwächen in der Wasserfestigkeit und Haftung zum Substrat zeigen. Das führt zu Fehlern in der Lackhaftung der Folgeschichten, die zu optischen Schäden führen und auch die mechanische Stabilität des Werkstücks negativ beeinflussen.

Aufgabe der vorliegenden Erfindung ist es deshalb, Überzugsmittel zur Verfügung zu stellen, die auf nicht vorbehandelten Polyolefinsubstraten als Haftgrundierung eingesetzt werden können und eine hervorragende Haftung bei erhöhten und bei kalten Temperaturen sowie bei Beanspruchung durch Wasser gewährleisten. Weiterhin soll den gestiegenen Anforderungen an den Umweltschutz, insbesondere bezüglich der Verwendung organischer Lösungsmittel Rechnung getragen werden.

Diese Aufgabe wird dadurch gelöst, daß ein Überzugsmittel zur Beschichtung von Kunststoffsubstraten zur Verfügung gestellt wird, das auf der Basis von vernetzenden wasserverdünnbaren Zweikomponenten(2K)-Harzsystemen und CPO beruht und nur geringe Anteile an organischen Lösungsmitteln enthält.

Dieses Überzugsmittel ist dadurch gekennzeichnet, daß es enthält
7,5 bis 25 Gew.-% mindestens eines Epoxidharzes in Dispersionsform
1,5 bis 15 Gew.-% mindestens eines wassermischbaren Polyamins
2 bis 15 Gew.-% mindestens eines chlorierten Polyolefins (CPO) mit einem Chlorierungsgrad von 15 bis 40 Gew.-%
0 bis unter 5 Gew.-% eines oder mehrerer organischer Lösemittel
und 85 bis 35 Gew.-%, bevorzugt 35 bis 50 Gew.-% Wasser,
sowie lackübliche Additive, Pigmente und/oder Füllstoffe. Die vorstehenden Gew.-% beziehen sich, sofern sie Harze betreffen, auf den Harzfestkörper. Das Überzugsmittel enthält als Hauptlösungsmittel Wasser.

Das Überzugsmittel soll als Zweikomponenten Überzugsmittel vorliegen und erst unmittelbar vor der Applikation gemischt und in eine vernetzungsfähige Form überführt werden.

Bei der Epoxidharzkomponente der erfindungsgemäß einsetzbaren wäßrigen Epoxidharzdispersion handelt es sich beispielsweise um handelsübliche wasserverdünnbare filmbildende Di- oder Polyepoxide. Es kann sich dabei um wäßrige Dispersionen oder um wäßrige Lösungen handeln. Es handelt sich hierbei in der Regel um keine chlorierten Epoxidharze.

Beispiele für solche Polyepoxide sind Polyglycidylether auf Basis von aliphatischen und/oder aromatischen Diolen, wie Bisphenol A, Bisphenol F, Novolake oder Polyalkylenglykole, die über funktionelle OH-Gruppen mit epoxidgruppenhaltigen Verbindungen, wie Epichlorhydrin umgesetzt werden können. Weitere Beispiele für Polyepoxidverbindungen sind Umsetzungsprodukte von aromatischen Diphenolen mit aromatischen Polycarbonsäuren zu Polyestern. Diese werden beispielsweise mit 2,3-Epoxipropanol (1) zu den Epoxidverbindungen umgesetzt.

Weitere Beispiele sind glycidylfunktionalisierte (Meth)Acrylpolymere. Dabei können die glycidylfunktionellen Monomeren einpolymerisiert werden, z.B. über Glycidyl-(meth)acrylat oder es werden OH-haltige Acrylate nach der Polymerisation über die OH-Gruppe zu epoxidgruppenhaltigen Verbindungen modifiziert. Über weitere ungesättigte Comonomere, die mit einreagiert werden können, können die Polymeren in ihren Eigenschaften beeinflußt werden.

Die Epoxidharze sind bevorzugt so aufgebaut, daß eine Wasserverdünnbarkeit gegeben ist. Das kann durch Einreagieren von hydrophilen Gruppen geschehen, wie nicht-ionische Gruppen, z.B. Polyetherstrukturen, Polyolstrukturen oder durch einreagierte ionische Gruppen. Die Epoxidharze können auch mit zusätzlichen ionischen oder nicht-ionischen selbstemulgierenden Epoxidharzen in die Wasserphase überführt werden. Bevorzugt ist die Verwendung von Epoxidharzdispersionen die nur selbst emulgierende Epoxidharze enthalten. Auf diese Weise können emulgatorfreie wäßrige Dispersionen gebildet werden. Es ist auch möglich Emulgatoren zuzusetzen, bevorzugt hat sich jedoch gezeigt, daß es sinnvoll ist, die Menge der externen Emulgatoren zu vermindern und Emulsionen herzustellen, die frei von Emulgatoren sind. Beispiele für solche verwendbaren wäßrigen Epoxidharzdispersionen sind in der DE-A-36 43 751, DE-A-30 20 301 oder US 4 987 163 beschrieben. Es handelt sich dabei um durch Einführung von hydrophilen Gruppen modifizierte Epoxidharze auf Basis von aromatischen Diolen, die stabile wäßrige Dispersionen ohne zusätzlichen Emulgator ergeben.

Das Molekulargewicht (Zahlenmittel, Mn) der Epoxidharze liegt bevorzugt bis zu 50000, die untere Grenze liegt bei 300. Werden Epoxidharze mit einem Mn unter 1000 eingesetzt sind sie noch flüssig bei Temperaturen bis zu 30°C, bei höherem Mn liegen sie als feste Substanzen vor. Der Einsatz fester Epoxidharze ist bevorzugt. Die Viskosität kann gegebenenfalls durch geringe Anteile an weichmachenden, insbesondere nichtflüchtigen Substanzen verringert werden. Das Epoxidäquivalentgewicht der Bindemittel beträgt bevorzugt 250 bis 10000.
Als reagierender (vernetzender) Bestandteil dieses Zweikomponenten-Überzugsmittels sind Polyamin-Verbindungen vorhanden. Es können solche verwendet werden, wie sie als Vernetzer in der Literatur beschrieben sind. Sie können in weiten Grenzen variiert werden. Sie enthalten reaktive Aminogruppen und gegebenenfalls weitere die Wasserlöslichkeit erhöhtende funktionelle Gruppen. Die Polyamine, die als Vernetzer geeignet sind, können niedermolekular sein, können aber auch filmbildende Eigenschaften haben. Es kann sich bei den Polyaminvernetzern insbesondere um Aminoharze bzw. Polyaminharze handeln.

Der Vernetzer muß eine ausreichende Anzahl von reaktiven Gruppen aufweisen. Das Äquivalentgewicht pro aktivem H-Atom liegt bevorzugt bei 50 bis 500, besonders bevorzugt bei 100 bis 400. Das Molekulargewicht kann in weiten Grenzen schwanken, solange Reaktivität und Wasserlöslichkeit bzw. Wasserdispergierbarkeit gegeben sind. Bevorzugt ist ein zahlenmittleres Molekulargewicht von 500 bis 20000.

Die Polyamin-Vernetzerkomponente wird so gewählt, daß Wasserverdünnbarkeit oder Wasserlöslichkeit gegeben ist. Das kann durch geeignete Wahl der Anzahl der polaren Gruppen, wie beispielsweise OH-Gruppen, Aminogruppen, Harnstoffgruppen oder Polyetherstrukturen erfolgen. Die Vernetzerkomponente kann entweder als wäßrige Dispersion vorliegen oder sie wird als konzentrierte Form vorliegen und bei der Verarbeitung mit Wasser oder wäßriger Dispersion verdünnt. Bevorzugt sind Polyaminharze auf aliphatischer Basis. Die geeigneten Polyamine enthalten 2 oder mehr Aminogruppen, wobei die Aminogruppen primärer und/oder sekundärer Art sein können. Weiterhin können gegebenenfalls andere funktionelle Gruppen vorhanden sein.

Beispiele für geeignete Polyamine sind in der EP-A-0 240 083 oder der EP-A-0 346 982 beschrieben. Beispiele hierfür sind aliphatische und/oder cycloaliphatische Amine mit 6 bis 24 C-Atomen, die 2 bis 10 primäre Aminogruppen und 0 bis 5 sekundäre Aminogruppen enthalten.

Polyaminharze können beispielsweise auch aminogruppenfreie Polymere sein, die nachträglich durch Modifizierung mit Aminogruppen im Überschuß umgesetzt werden. Beispiele dafür sind Polyglycidylether ausgehend von Bisphenol A, Bisphenol F, Novolaken oder epoxidierten Polybutadienen, die nachträglich mit Di- oder Polyamin umgesetzt werden, wobei ein Überschuß an Aminogruppen vorliegen muß.

Weiterhin können Polyaminisocyanataddukte eingesetzt werden. Dabei sind als Isocyanate die üblichen aliphatischen, cycloaliphatischen und/oder aromatischen Polyisocyanate geeignet. Die Umsetzung der Isocyanatgruppen mit den Polyaminen erfolgt in solch einer Menge, daß nach der Reaktion noch eine ausreichende Anzahl reaktiver Aminogruppen vorhanden ist.

Beispiele für acryloylungesättigte Verbindungen zum Herstellen von erfindungsgemäß verwendbaren Polyaminaddukten sind in der US-A-4 303 563 oder der EP-A-0 262 720 oder der EP-A-0 179 954 beschrieben. Es handelt sich dabei um Polyamine, die mit ungesättigten Verbindungen, die gegebenenfalls auch nachträglich zugesetzt werden können, modifiziert wurden.

Als chlorierte Polyolefine können beispielsweise handelsübliche Materialien eingesetzt werden. Es handelt sich insbesondere um chloriertes Polyethylen, chloriertes Polypropylen oder chlorierte Copolymere davon. Es können auch Mischungen solcher Polymere eingesetzt werden. Die chlorierten Polyolefine haben einen Chlorierungsgrad von 15 bis 40 Gew.-%; das Molekulargewicht (Mn) der CPO beträgt bevorzugt 700 bis 70000. Gegebenenfalls können die Polymere modifiziert sein, z.B. durch den Einbau polarer Gruppen wie beispielsweise Maleinsäureanhydrid. Sie könnenals Pulver oder als wäßrige Suspension vorliegen. Insbesondere sollen sie keine oder nur geringe Anteile von organischen Lösungsmitteln aufweisen. Gegebenenfalls sind der Hauptanteil der organischen Lösungsmittel durch Destillation zu entfernen.

Die CPO werden bevorzugt als wäßrige Dispersion eingesetzt. Dabei können diese Dispersionen aufgrund der Herstellung noch geringe Anteile an organischen Lösemitteln aufweisen und auch anionische oder nicht-ionische Emulgatoren aufweisen. Beispielsweise kann der CPO-Anteil im Überzugsmittel in der Form von Dispersionen analog der WO 93/01 244 oder der WO 90/12 056 zugesetzt werden. Dabei soll der Anteil der Emulgatoren so gering wie möglich gehalten werden.

Als organische Lösungsmittel sind die üblichen lacktechnischen Lösungsmittel geeignet. Die Menge der organischen Lösungsmittel soll möglichst gering gehalten werden. Vorzugsweise werden nicht aromatische Lösungsmittel eingesetzt. Ebenso ist es bevorzugt mindestens teilweise mit Wasser mischbare Lösungsmittel einzusetzen. Die Lösungsmittel fördern die Stabilität der erfindungsgemäßen wäßrigen Emulsionen. Weiterhin fördern sie den Verlauf des aufgetragenen Lackfilms. Die gegebenenfalls vorhandenen funktionellen Gruppen der Lösungsmittel sollen unter Vernetzungsbedingungen nicht oder nur langsam mit den vernetzbaren Harzkomponenten reagieren. Beispiele für verwendbare Lösungsmittel sind Ketone wie Methylisobutylketon, Aceton, Cyclohexanon, N-Methylpyrrolidon; Kohlenwasserstoffe, wie Xylol, Solvesso^{R}, Cyclohexan; Alkohole, wie Butanol, Isopropanol, Butandiol, Propandiol, Amylalkohol, Ethoxypropanol, Methoxypropanol; Glykolether, wie Ethylglykol, Butylglykol.

Gegebenenfalls können die Überzugsmittel Additive sowie Pigmente enthalten. Als Additive sind die üblichen lacktechnischen Additive zu verstehen, wie Netzmittel, Dispergierhilfsmittel, Antischaummittel, verlaufsfördernde Mittel, Katalysatoren, Rheologieadditive sowie Antikratermittel. Diese Stoffe müssen mit der Epoxidharzdispersion verträglich sein.

Als Pigmente können übliche Pigmente oder Füllstoffe zugesetzt werden. Diese können auf anorganischer oder auf organischer Basis sein, wie z.B. Titandioxid, Ruß, Aluminiumsilikat oder Siliciumdioxid oder vernetzte Polymermikroteilchen. Gegebenenfalls können auch anorganische oder organische Farbstoffe zugesetzt werden. Die Pigmente und Füllstoffe können nach bekannten Verfahren dispergiert werden. Sie können entweder in der Epoxidharzdispersion oder bevorzugt in der Aminkomponente in lösungsmittelhaltiger Form oder in Dispersionsform angerieben werden. Gegebenenfalls ist es möglich, in geringen Anteilen eines zusätzlichen Bindemittels, einem Anreibeharz, z.B. auf Polyurethanharzbasis, die Pigmente fein zu dispergieren. Die dazu notwendigen Aggregate und Vorgehensweisen sind dem Fachmann geläufig.

Gegebenenfalls können in den Überzugsmitteln noch weitere Bindemittel vorhanden sein. Es ist bevorzugt, daß diese Bindemittel nicht mit den vernetzenden Komponenten reagieren. Insbesondere handelt es sich um wäßrige Polyurethandispersionen, die dem Überzugsmittel zugesetzt werden können. Die Polyurethanharze (PU) liegen in wasserstabilisierter Form vor, dabei kann eine anionische Stabilisierung vorliegen, bevorzugt werden jedoch nicht-ionische Stabilisierungen. Das kann beispielsweise durch den Einbau von hydrophilen Gruppen, wie Polyhydroxylgruppen oder Polyethergruppen, unterstützt werden. Es sollten möglichst keine zusätzlichen Emulgatoren eingesetzt werden. Eine weitere bevorzugte Ausführungsform setzt als zusätzliches Bindemittel PU-Harze auf Basis aliphatischer Bausteine ein. Die PU-Dispersion soll mit der Epoxidharzdispersion als Bindemittelmischung verträglich sein. Es ist auch möglich den Aminvernetzer mit der wäßrigen Polyurethanharzdispersion zu vermischen.

Das Überzugsmittel liegt als Zweikomponenten(2K)-Überzugsmittel vor, d.h. Epoxidharz und Aminoharz liegen getrennt vor. Zur Anwendung des Überzugsmittels wird eine Mischung der beiden Komponenten Epoxidharz sowie Aminoharz hergestellt. Dabei ist es nicht wesentlich, ob die CPO-Dispersion, die Lösungsmittel, die zusätzlichen Polyurethanharze, die Pigmente oder die Additive in der Epoxidharz-Komponente oder in der Aminoharz-Komponente vorliegen. Es muß jeweils nur die Lagerstabilität der einzelnen Komponenten gewährleistet sein. Es hat sich jedoch als günstig erwiesen, gegebenenfalls die PU-Dispersion mit der Aminoharz-Komponente zu mischen, ebenso wie die Pigmente und die CPO-Anteile bevorzugt in der Aminkomponente vorliegen. Unmittelbar vor der Applikation werden die Komponenten gemischt. Man erhält ein Überzugsmittel, das bei Raumtemperatur schon eine Reaktion zeigt und vernetzt. Es ist deshalb nach dem Anmischen nur eine begrenzte Zeit verarbeitungsfähig. Um die Vernetzung zu beschleunigen, können Katalysatoren zugesetzt werden oder es werden die Vernetzungstemperaturen erhöht.

Die Mengenverhältnisse werden so gewählt, daß das Verhältnis der reaktiven H-Atome der Vernetzerkomponente zu den Epoxidgruppen der Epoxidharze von 0,7 : 1 bis 1,5 : 1 beträgt, bevorzugt von 0,9 : 1 bis 1,3 : 1. Das zusätzlich Bindemittel ist im wesentlichen an der Vernetzerreaktion nicht beteiligt.

Das 2K-Überzugsmittel enthält dabei:
7,5 bis 25 Gew.-% einer oder mehrerer Epoxidharzdispersionen (bezogen auf den Harzfestkörper)
1,5 bis 15 Gew.-% eines oder mehrerer wassermischbarer Polyamine, z.B. Aminoharze
2 bis 15 Gew.-% eines oder mehrerer chlorierter Polyolefine mit einem Chlorierungsgrad von 15 bis 40 Gew.-%,
0 bis unter 5 Gew.-% eines oder mehrerer organischer Lösungsmittel.

Eine bevorzugte Ausführungsform enthält dabei
0 bis 15 Gew.-% einer Polyurethandispersion (bezogen auf den Harzfestkörper).

Bevorzugt sind die Epoxidharzdispersionen emulgatorfrei. Die Menge an gegebenenfalls vorhandenen Emulgatoren soll möglichst gering sein. Insbesondere soll die Summe der Emulgatoren der einzelnen Bestandteile unter 0,5 % liegen. Die PU-Dispersion ist bevorzugt nicht-ionisch stabilisiert. Das PU-Harz beruht bevorzugt auf aliphatischen Bestandteilen. Die Menge an organischen Lösungsmitteln liegt unter 5 Gew.-%, insbesondere an nicht aromatischen, polare Gruppen enthaltene Lösungsmittel.

Als Substrate dienen bevorzugt Kunststoffsubstrate, insbesondere werden modifizierte oder nicht modifizierte Polyolefine eingesetzt. Beispiele dafür sind insbesondere Polyethylen- oder Polypropylensubstrate, sowie Substrate aus Copolymeren oder Mischungen davon. Da die erfindungsgemäßen Überzugsmittel über einen breiten Temperaturbereich vernetzen können, der bei geringen Temperaturen beginnt, kann die Vernetzungstemperatur je nach der Temperaturempfindlichkeit des Substrats ausgewählt werden.

Das Überzugsmittel wird auf das übliche vorbehandelte im speziellen Fall auch nicht vorbehandelte Substrat gegebenenfalls nach einer Reinigung aufgetragen. Danach wird der Überzug chemisch vernetzt, gegebenenfalls kann das durch erhöhte Temperatur bis zu 100°C unterstützt werden. Bevorzugt ist ein Temperaturbereich von 20 bis 80°C. Nach dem Vernetzen erhält man homogen beschichtete Kunststoffsubstrate mit einer glatten störungsfreien Oberfläche. Die Haftung zum Substrat ist gut. Die mechanischen Eigenschaften des lackierten Gegenstandes werden nicht negativ beeinflußt, insbesondere auch nicht in der Kälte (Kälteschlagzähigkeit). Die erhaltenen Überzüge weisen eine hohe Wasserfestigkeit des Films auf, z.B. nach DIN 50 017 oder ISO 2812-2, d.h. auch bei Beanspruchung mit Wasser oder Wasserdampf treten keine Enthaftungen oder sonstige Störungen im vernetzten Film auf.

Die so erhaltenen Überzüge können, wenn sie farbig pigmentiert sind, auch als Einschichtdecklack-Überzüge ausgebildet sein. Bevorzugt ist es jedoch möglich, auf diese Überzüge einen oder mehrere weitere Überzüge, z.B. Basislack/Klarlacküberzüge oder Unidecklacke zu applizieren. Auch die so erhaltenen Mehrschichtaufbauten zeigen eine gute Haftung zum Substrat, eine gute Kälteelastizität und keine signifikanten Veränderungen oder Enthaftungserscheinungen bei Belastung mit Feuchtigkeit. Sie werden ohne zusätzlichen Haftprimer verwendet. Die Überzugsmittel sind besonders geeignet, temperaturempfindliche Kunststoffsubstrate für die Automobilindustrie zu beschichten.

### Beispiel 1

Es werden 11 % eines handelsüblichen Pastenharzes (nach EP-A-0 438 090, Beispiel 2; FK 40 %), 6 % Wasser, 2 % eines handelsüblichen Netzmittels und Entschäumers miteinander gemischt und dazu 26,3 % eines handelsüblichen Titandioxids, 5 % eines Schichtsilikats sowie 0,2 % Ruß eingearbeitet und auf einer Perlmühle 20 Minuten bei maximal 45°C vermahlen. Zu dieser Pigmentpaste werden als Mischung 12,5 % einer nicht-ionischen Polyurethanharzdispersion (aliphatische Isocyanat- und Polyesterbausteine, Festkörper 40 %) und 1 % N-Methylpyrrolidon und 0,5 % Wasser gegeben. Danach werden 2 % Dipropylenglykoldimethylether, 0,3 % eines handelsüblichen Verdickers (30 % in Nasser; Acrylatbasis) sowie 8,8 % eines handelsüblichen Polyamins (H-Äquivalentgewicht 200) sowie 23 % einer CPO-Emulsion (20 %ig in Wasser) zugesetzt. Mit 1,5 % Wasser wird die Viskosität nach dem Homogenisieren eingestellt.

Es werden 97 % einer Epoxidharzdispersion (54 % Festkörper nach DE-A-38 20 301, Beispiel III. 7) und 3 % Xylol gemischt.

Aus 75 Teilen der pigmentierten Aminharzkomponente und 25 Teilen der Epoxidharzkomponente wird ein Überzugsmittel hergestellt und gegebenenfalls mit wenig Wasser die Viskosität eingestellt. Dieses Überzugsmittel wird innerhalb von 30 Minuten auf die Substrate appliziert.

### Beispiel 2

Es werden 11 % eines handelsüblichen Pastenharzes nach Beispiel 1, 6 % Wasser, 2 % eines handelsüblichen Netzmittels und Entschäumers miteinander gemischt und dazu 28 % eines handelsüblichen Titandioxids, 5,3 % eines Schichtsilikats, sowie 0,2 % Ruß eingearbeitet und auf einer Perlmühle 20 Minuten bei maximal 45°C vermahlen. Zu dieser Pigmentpaste werden 2,5 % einer Polyurethanharzdispersion nach Beispiel 1 und 1 % NMP zusammen mit 0,5 % Wasser gegeben. Danach werden 2 % Dipropylenglykoldimethylether, 0,3 % eines handelsüblichen Verdickers (30 % in Wasser; Acrylatbasis) sowie 8,8 % eines handelsüblichen Polyamins (H-Äquivalent 200) sowie 23 % einer CPO-Emulsion (20 %ig in Wasser) zugesetzt. Mit Wasser wird die Viskosität nach dem Homogenisieren eingestellt.

Es werden 97 % einer Epoxidharzdispersion (53 % Festkörper nach DE-A-38 20 301, Beispiel II. 3) und 3 % Solvesso 100 gemischt.

Aus 75 Teilen der pigmentierten Komponente und 25 Teilen der Epoxidharzkomponente wird ein Überzugsmittel hergestellt und gegebenenfalls mit wenig Wasser die Viskosität eingestellt. Dieses Überzugsmittel wird innerhalb von 30 Minuten auf die Substrate appliziert.

### Beispiel 3 (Vergleichsbeispiel)

Es werden 37,5 % einer nicht-ionischen Polyurethandispersion (Uraflex XP401 UZ, 40 % in Wasser) mit 20,0 % Titandioxid, 2,5 % Schichtsilikat sowie 0,1 % Ruß gemischt und 20 Minuten bei maximal 45°C auf einer Perlmühle vermahlen. Zu dieser Paste werden 37,5 % einer CPO-Emulsion (24 % in Wasser) zugegeben und danach 2,0 % Butylglykol, 0,1 % eines handelsüblichen Entschäumers sowie 0,4 % eines handelsüblichen Verdickers (5 %ig in Wasser Polyurethanbasis) zugesetzt. Gegebenenfalls kann die Viskosität mit wenig Wasser eingestellt werden.

Das Überzugsmittel kann durch Spritzapplikation auf ein Kunststoffsubstrat aufgetragen werden.

### Herstellungsbeispiel von Haftgrundierung

Die resultierenden Grundierungsüberzugsmittel werden mittels Spritzapplikation auf das entfettete Substrat (Keltan ^{R} TP 0550 der DSM) in ca. 25 µm Trockenfilmdicke aufgebracht. Der Film wird nach 10 Minuten Ablüften 15 Minuten bei 80°C getrocknet. Danach kann ein handelsüblicher weiterer Lackaufbau erfolgen.
- Lackaufbau:: 25 µm Zweikomponenten-Grundierung gemäß Beispiel 1 - 3,
35 µm handelsüblicher Zweikomponenten-Unidecklack (R. 47131 der Herberts GmbH)
Die Prüfung auf Feuchtraumbeständigkeit (DIN 50017, Kondenswasserprüfklimate), Haftung zu Nachfolgeschichten (DIN 53151) und die Elastizität im Durchstoß (DIN 53443 Teil 2, Verbund zum Substrat) auch bei -25°C zeigen ein sehr gutes Ergebnis.

Der Vergleichsversuch zeigt bei der Prüfung auf Feuchtraumbeständigkeit ein sehr schlechtes Ergebnis. Es sind Schäden an der Lackoberfläche zu beobachten. Die Haftung zwischen den einzelnen Schichten zeigt erhebliche Mängel.

## Patentansprüche

1. Wäßriges Zweikomponenten-Überzugsmittel, geeignet zur Beschichtung von Kunststoffsubstraten, enthaltend
7,5 bis 25 Gew.-% mindestens eines Epoxidharzes in Dispersionsform, wobei sich die Gew.-% auf den Harzfestkörper beziehen,
1,5 bis 15 Gew.-% mindestens eines wassermischbaren Polyamins als Vernetzer,
2 bis 15 Gew.-% mindestens eines chlorierten Polyolefins mit einem Chlorierungsgrad von 15 bis 40 Gew.-%,
0 bis unter 5 Gew.-% eines oder mehrerer organischer Lösungsmittel,
85 bis 35 Gew.-% Wasser,
sowie lackübliche Additive, Pigmente und/oder Füllstoffe, wobei Epoxidharz und Polyamin in getrennten Komponenten vorhanden sind.

2. Überzugsmittel nach Anspruch 1, dadurch gekennzeichnet, daß die chlorierten Polyolefine in wäßriger Dispersionsform eingesetzt sind.

3. Überzugsmittel nach Anspruch 1 und 2, dadurch gekennzeichnet, daß die chlorierten Polyolefine zusammen mit dem Polyamin als Komponente vorliegen.

4. Überzugsmittel nach Anspruch 1 bis 3, dadurch gekennzeichnet, daß die Epoxidharze ein Epoxidäquivalentgewicht von 250 bis 10000 aufweisen.

5. Überzugsmittel nach Anspruch 4, dadurch gekennzeichnet, daß als Epoxidharze überwiegend feste Epoxidharze eingesetzt werden.

6. Überzugsmittel nach Anspruch 1 bis 5, dadurch gekennzeichnet, daß es im wesentlichen frei von aromatischen Lösungsmitteln ist.

7. Überzugsmittel nach Anspruch 1 bis 6, dadurch gekennzeichnet, daß darin bis zu 15 Gew.-% mindestens einer wäßrigen Polyurethandispersion enthalten sind, bezogen auf den Harzfestkörper.

8. Überzugsmittel nach Anspruch 7, dadurch gekennzeichnet, daß die Polyurethanharze nicht-ionisch stabilisiert sind.

9. Verfahren zum Beschichten eines Kunststoffsubstrats, dadurch gekennzeichnet, daß ein Überzugsmittel nach einem der Ansprüche 1 bis 8 verwendet wird.

10. Verfahren zur Herstellung einer Mehrschichtlackierung, dadurch gekennzeichnet, daß als erste Schicht ein Überzugsmittel nach einem der Ansprüche 1 bis 8 auf ein Substrat als Grundierung aufgebracht und anschließend mit einer oder mehreren weiteren Schichten überlackiert wird.

11. Verfahren nach Anspruch 9 und 10, dadurch gekennzeichnet, daß Kunststofformteile auf der Basis von Polyolefinen mit oder ohne Vorbehandlung beschichtet werden.

12. Verwendung der Überzugsmittel nach einem der Ansprüche 1 bis 8 zum Beschichten von Kunststoff-Substraten, insbesondere Polyolefinsubstraten.
